# DEMANDE DE BREVET EUROPEEN

(11) **EP 1 226 988 A2**
(43) Date de publication de la demande: **31.07.2002**
(21) Numéro de dépôt: 02001314.0
(22) Date de dépôt: 18.01.2002
(51) Int. Cl.: B60H 1/00

(54) **Palier d'arbre**

(30) Priorité: 25.01.2001 DE 10103351
(71) Demandeur: Valeo Klimasysteme GmbH, 96476 Rodach (DE)
(72) Inventeur: Grimke, Dirk, 29399 Wahrenholz (DE)
(74) Mandataire: Gérard, Michel

(57) **Abrégé**

Palier d'arbre pour des arbres (20,30) essentiellement parallèles, en particulier de volets d'air dans un appareil de chauffage, ventilation et/ou climatisation d'un véhicule, comprenant des manchons de support (12,13,14,54) respectifs, les manchons de support se chevauchant au moins partiellement dans la direction axiale.

## Description

La présente invention concerne en général un palier d'arbre pour des arbres essentiellement parallèles et plus spécialement un palier d'arbre pour des arbres essentiellement parallèles de volets d'air dans un appareil de chauffage, ventilation et/ou climatisation d'un véhicule.

Dans de nombreuses applications, comme par exemple une climatisation à deux ou plusieurs zones, des canaux correspondant à chaque zone sont formés dans un carter de guidage d'air, lesquels sont séparés les uns des autres au moyen de parois de séparation. Afin de permettre un réglage du débit d'air, du rapport de mélange entre l'air frais et l'air chaud ou d'autres paramètres aérothermiques, on prévoit habituellement dans chaque canal ainsi formé un volet d'air qui est articulé au niveau de ses extrémités à une paroi ou une paroi intermédiaire du carter de guidage d'air.

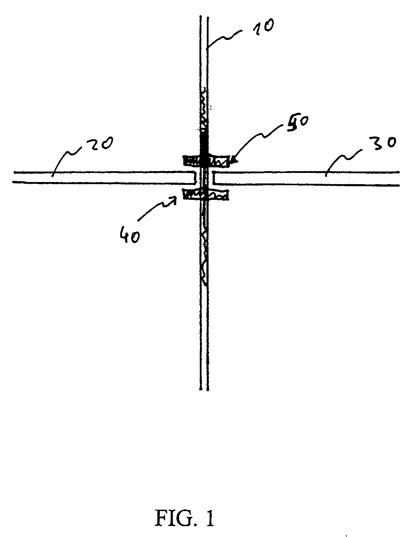

Un tel palier d'arbre connu, tel qu'il est actuellement utilisé dans ses installations par la Demanderesse, est illustré dans la figure 1. Comme on peut le voir, de part et d'autre d'une paroi de séparation 10 d'un carter de guidage d'air non illustré sont prévus des dispositifs de palier 40, 50, qui peuvent servir de manchons de support pour les arbres respectifs 20, 30. En particulier dans le cas où, comme illustré, les arbres sont presque en affleurement, il existe le problème que l'engagement entre le dispositif de palier 50 et l'arbre 30 d'une part et le dispositif de palier 40 et l'arbre 20 d'autre part est soit très petit, soit le collier du dispositif de palier requiert trop d'espace de construction, ce qui implique une forme complexe du volet d'air monté sur les arbres, ou d'autre part une réduction de la section transversale libre.

L'objet de la présente invention est donc de perfectionner un palier d'arbre connu pour des arbres essentiellement parallèles, en particulier de volets d'air dans un appareil de chauffage, ventilation et/ou climatisation d'un véhicule, comprenant des manchons de support respectifs, de telle manière que l'on puisse obtenir un support de paliers amélioré et/ou une configuration plus compacte.

Conformément à l'invention, cet objet est réalisé par un palier d'arbre ayant les caractéristiques de la revendication 1. Des formes de réalisation préférées sont définies dans les revendications dépendantes.

En particulier, l'invention propose un palier d'arbre pour des arbres essentiellement parallèles, en particulier de volets d'air dans un appareil de chauffage, ventilation et/ou climatisation d'un véhicule, ayant des manchons de support respectifs, dans lequel les manchons de support se chevauchent au moins partiellement dans la direction axiale. Autrement dit, l'espace formé par un manchon de support peut être utilisé pour recevoir l'autre manchon de support, et donc pour augmenter la surface d'appui pour un arbre monté, et/ou pour réduire l'espace de construction nécessaire, en particulier la dimension d'une paroi de séparation dans la région du palier d'arbre. Il convient de comprendre que le chevauchement au moins partiel des manchons de support ne dois pas absolument correspondre à un chevauchement correspondant des engagements repectifs avec des portions d'arbre. Au contraire, il pourrait aussi être envisagé que l'engagement du palier de l'arbre de gauche avance davantage vers la droite que l'engagement correspondant de l'arbre de droite. En outre, il convient de comprendre que pour supporter le montage des paliers, on peut prévoir des moyens supplémentaires, qui remplissent essentiellement la fonction d'un support de paliers connu.

La solution selon l'invention présente en outre l'avantage que le processus de montage est amélioré, et ce indépendamment du fait que l'on commence lors du montage avec l'un ou l'autre arbre, car les arbres peuvent pénétrer chacun profondément dans la paroi de séparation. Ainsi, on réduit nettement le risque d'un montage défectueux, qui existe habituellement du fait d'arbres obliques.

Les manchons de support sont avantageusement réalisés de manière essentiellement coaxiale les uns aux autres. Ainsi, il est par exemple possible de monter un premier volet d'air au moyen de son arbre dans la paroi de séparation, tandis qu'un autre volet est monté dans le premier volet, en particulier dans la portion d'extrémité de l'arbre.

Les portions d'extrémité des arbres peuvent être réalisées d'une pièce ou également posséder des dispositifs d'engagement correspondants, mais dans tous les cas on préfère que les arbres puissent être essentiellement en affleurement l'un avec l'autre après le montage.

En variante d'une réalisation coaxiale, la solution selon l'invention est également applicable pour monter de manière excentrée deux arbres essentiellement parallèles l'un à l'autre. Il en résulterait qu'au lieu de la commande autrement indépendante des deux volets d'air, il existerait une certaine coopération.

Dans une forme de réalisation préférée, l'un des manchons de support est réalisé dans la portion d'engagement du palier de l'autre arbre/volet d'air.

Avantageusement, une partie formant un manchon de support est simultanément un tourillon. Dans ce contexte, il convient de mentionner que le support de paliers peut également s'effectuer au moyen de plusieurs manchons de support pour le même arbre. Par exemple, il serait possible de supporter un arbre à la fois par rapport à la paroi de séparation et à l'intérieur de la portion d'extrémité de l'autre arbre.

Afin de permettre un processus de montage défini et/ou un maintien de la position après le montage des volets d'air individuels et/ou des arbres associés, on prévoit avantageusement sur au moins un arbre, en particulier sur chaque arbre, un dispositif limitant le mouvement axial.

En outre, il est préférable de prévoir au moins un dispositif d'étanchéité, qui peut empêcher d'une part l'introduction d'impuretés dans la région du palier et d'autre part un passage d'air à travers la paroi de séparation. Dans une forme de réalisation particulièrement préférée, chaque extrémité d'arbre dispose d'un dispositif d'étanchéité moulé par injection. Un dispositif d'étanchéité peut, outre sa fonction de joint, supporter voire assurer lui-même la limitation du mouvement axial, une fonction d'enclenchement pouvant également être réalisée, afin d'indiquer par exemple à la personne réalisant le montage que les arbres respectifs sont montés correctement.

Afin de simplifier l'introduction d'une extrémité d'arbre dans le manchon de support correspondant, un chanfrein est avantageusement réalisé sur au moins une extrémité d'arbre ou une partie du palier.

Finalement, on préfère que les manchons de support se chevauchent sur au moins l'épaisseur d'une paroi intermédiaire, en particulier sur au moins 4 mm.

D'autres avantages et caractéristiques de la présente invention résultent en outre de la description suivante, indiquée à titre illustratif uniquement, de formes de réalisation actuellement préférées, qui s'accompagne des dessins annexés, dans lesquels :
la figure 1 illustre un agencement de palier d'arbre selon l'état de la technique ;
la figure 2 illustre une première forme de réalisation préférée d'un palier d'arbre selon l'invention ;
la figure 3 illustre une autre forme de réalisation préférée d'un palier d'arbre selon l'invention.

Comme l'illustre la figure 1, on doit souvent articuler deux arbres 20, 30 par rapport à une paroi intermédiaire 10, ceci ayant été réalisé jusqu'à présent par la formation de manchons de support de part et d'autre.

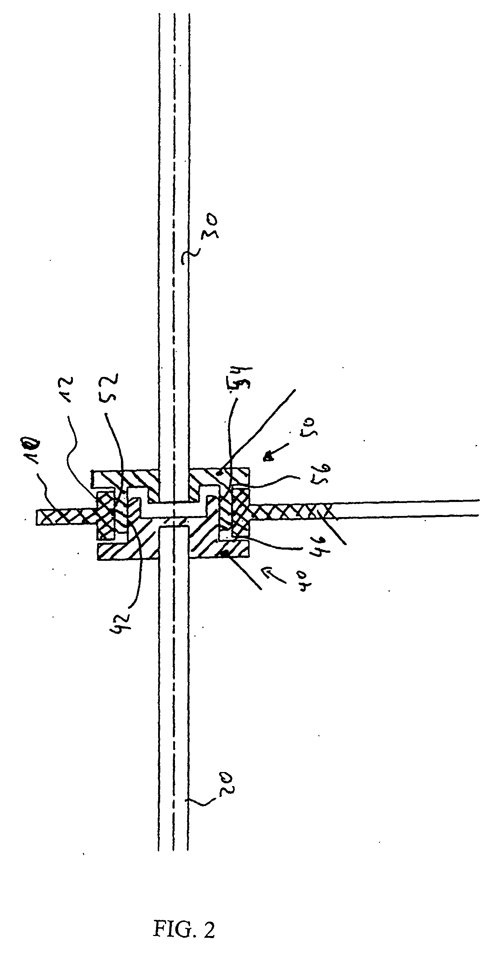

Dans la forme de réalisation illustrée dans la figure 2, il s'agit également de monter des arbres 20, 30 avec des volets d'air associés (non illustrés) par rapport à une paroi intermédiaire 10, les exigences d'espace de construction devant être réduites et/ou la surface d'appui devant être augmentée. La paroi intermédiaire 10 définit un manchon de support 12, dans lequel la portion d'extrémité de l'arbre 30 peut venir en prise. A cet effet, une partie séparée ou également le volet d'air lui-même peut former un tourillon creux, qui vient en prise avec le manchon de support 12 par l'intermédiaire de la surface d'appui 52. En face de la surface d'engagement 52, cette partie constitue un espace creux, qui définit une face de manchon de support 54. Les deux faces de manchon de support 12 et 54 se chevauchent ainsi au moins sur l'épaisseur de la paroi intermédiaire 10.

A l'intérieur de la face de manchon de support 54 se trouve une partie de palier de l'autre arbre 20, qui peut être formée d'une pièce avec l'arbre, qui peut se présenter sous forme de pièce séparée ou également qui peut même faire partie du volet d'air. Ainsi, un tourillon est formé par la face 42, lequel peut coopérer avec la face de manchon de support 54.

Afin de limiter les mouvements axiaux des arbres 20 et 30, des surfaces d'appui respectives 46, 56 sont prévues, lesquelles peuvent coopérer avec les faces latérales de la face de manchon de support 12. Comme illustré, les extrémités distales respectives des arbres, respectivement des portions d'engagement, sont réalisées avec un chanfrein afin de faciliter leur introduction respective.

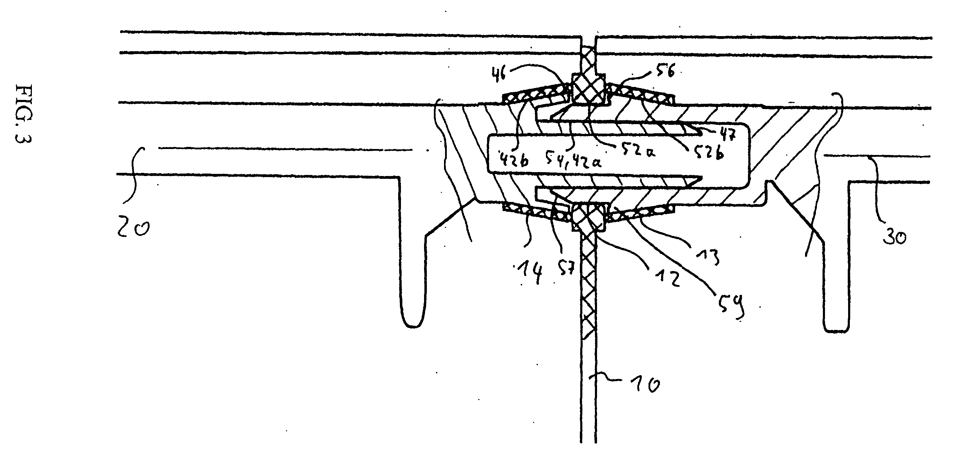

La figure 3 illustre une autre forme de réalisation préférée d'un agencement de palier d'arbre selon l'invention. Comme dans la forme de réalisation illustrée dans la figure 2, il s'agit de supporter deux arbres 20, 30 par rapport à une paroi intermédiaire 10. Dans la forme de réalisation illustrée dans la figure 3, le support de paliers est essentiellement amélioré en ce que l'on dispose d'un domaine de chevauchement relativement grand entre les manchons de support.

La paroi intermédiaire 10 forme à nouveau une face de manchon de support 12, avec laquelle une partie de l'arbre de droite 30 peut coopérer par le biais d'une surface d'engagement 52a. Dans la forme de réalisation illustrée, des dispositifs d'étanchéité 13, 14 sont également illustrés de part et d'autre de la paroi intermédiaire 10, lesquels assurent d'une part qu'aucune impureté ne peut pénétrer dans la région du palier, et empêchent d'autre part toute fuite d'air. Dans la forme de réalisation illustrée, les dispositifs d'étanchéité 13, 14 sont reliés fermement aux extrémités des arbres, par exemple par moulage par injection, de sorte que les portions d'extrémité distales des dispositifs d'étanchéité 13, 14 reposent contre la paroi intermédiaire et ainsi peuvent limiter le mouvement axial des arbres. En variante, il serait également possible de fixer les dispositifs d'étanchéité 13, 14 à la paroi intermédiaire 10 au lieu de les fixer aux arbres respectifs, ce par quoi une fonction d'enclenchement correspondante serait réalisée. Dans ce cas, l'engagement du dispositif d'étanchéité 14 avec la face 42b pourrait orienter et supporter l'arbre de gauche 20 et l'engagement du dispositif d'étanchéité 13 avec la face 52b pourrait orienter et supporter l'arbre de droite 30, et ce également à chaque fois sans la présence de l'autre dispositif de palier correspondant.

Dans l'arbre de droite 30 est formé un espace creux qui définit intérieurement une face de manchon de support 54. Dans ce manchon de support peut être introduite la portion d'extrémité de l'autre arbre 20, la portion de face 42a agissant à la manière d'un tourillon. Ainsi, l'arbre 20 est monté à l'intérieur de l'arbre 30, une surface d'appui 56, respectivement 46 étant formée à la fois pour l'arbre 30 et pour l'arbre 20, afin de pouvoir limiter le mouvement axial.

La forme de réalisation illustrée dans la figure 3 se distingue, en plus du net chevauchement, par le fait que la séquence de montage est quelconque, car les deux extrémités de palier pénètrent loin à travers la paroi 10, tandis que les dispositifs d'étanchéité empêchent efficacement tout passage d'air.

Bien que la présente invention ait été décrite précédemment en se référant entièrement aux formes de réalisation actuellement préférées, l'homme de l'art comprendra que de très diverses modifications sont possibles dans le cadre des revendications. En particulier, des caractéristiques individuelles d'une forme de réalisation peuvent être combinées au choix avec des caractéristiques d'une autre forme de réalisation.

## Revendications

1. Palier d'arbre pour des arbres essentiellement parallèles, en particulier pour des volets d'air dans un appareil de chauffage, ventilation et/ou climatisation d'un véhicule, comprenant des manchons de support respectifs (12, 54 ; 12, 13, 14, 54), **caractérisé en ce que** les manchons de support (12, 54 ; 12, 13, 14, 54) se chevauchent au moins partiellement dans la direction axiale.

2. Palier d'arbre selon la revendication 1, **caractérisé en ce que** les manchons de support (12, 54 ; 12, 13, 14, 54) sont coaxiaux.

3. Palier d'arbre selon la revendication 1 ou 2,
**caractérisé en ce que** les arbres (20, 30) sont essentiellement en affleurement.

4. Palier d'arbre selon la revendication 1, **caractérisé en ce que** les arbres sont excentriques.

5. Palier d'arbre selon l'une quelconque des revendications précédentes, **caractérisé en ce que** l'un des manchons de support (54) est formé à l'intérieur ou dans la portion d'engagement de palier (56) de l'autre arbre/volet d'air.

6. Palier d'arbre selon l'une quelconque des revendications précédentes, **caractérisé en ce qu'**une partie formant un manchon de support est simultanément un tourillon.

7. Palier d'arbre selon l'une quelconque des revendications précédentes, **caractérisé en ce que**, sur au moins un arbre (10, 20), en particulier sur chaque arbre, on prévoit un dispositif (46, 56) limitant le mouvement axial.

8. Palier d'arbre selon l'une quelconque des revendications précédentes, **caractérisé en ce qu'**il est prévu au moins un dispositif d'étanchéité (14, 13).

9. Palier d'arbre selon l'une quelconque des revendications précédentes, **caractérisé en ce qu'**au moins une extrémité d'arbre, en particulier chaque extrémité d'arbre, présente au moins un chanfrein (47, 57).

10. Palier d'arbre selon l'une quelconque des revendications précédentes, **caractérisé en ce que** les manchons de support (12, 54 ; 12, 13, 14, 54) se chevauchent sur au moins l'épaisseur d'une paroi intermédiaire (10), en particulier sur au moins 4 mm.
